(19) Europäisches Patentamt / European Patent Office / Office européen des brevets

(11) **EP 4 583 418 A1**

(12) **EUROPEAN PATENT APPLICATION**

(43) Date of publication:
**09.07.2025 Bulletin 2025/28**

(21) Application number: **24222929.2**

(22) Date of filing: **23.12.2024**

(51) International Patent Classification (IPC):
**H04B 7/0413** (2017.01)

(52) Cooperative Patent Classification (CPC):
**H04B 7/0413**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.01.2024 FI 20245004**

(71) Applicant: **Nokia Solutions and Networks Oy 02610 Espoo (FI)**

(72) Inventor: **WANTIEZ, Eric Le Perray en Yvelines (FR)**

(74) Representative: **Nokia EPO representatives Nokia Technologies Oy Karakaari 7 02610 Espoo (FI)**

(54) **MIMO SYSTEM MODULE**

(57)     An apparatus, method and computer program is described comprising: receiving radio frequency signals from first and second transmit chains of a MIMO system at first and second inputs of an radio frequency module respectively; providing first and second outputs of the radio frequency module to first and second antenna elements of the MIMO system respectively; routing radio frequency signals from the first and second inputs to the first and second outputs respectively in a first mode of operation; and routing radio frequency signals from the second input to both the first and second outputs in a second mode of operation in which the first transmit chain is deactivated.

Fig. 7

EP 4 583 418 A1

**Description**

**Field**

The present specification relates to handling radio frequency signals in multiple-input-multiple-output (MIMO) systems.

**Background**

Multiple Input Multiple Outputs (MIMO) is a well-established radio communication methodology. Some MIMO systems offer high throughput capacity, with multiple beams being transmitted simultaneously. There remains a need for further developments in this field.

**Summary**

In a first aspect, this specification describes an apparatus comprising: at least two inputs, including first and second inputs for receiving radio frequency signals from first and second transmit chains of a MIMO system respectively; at least two outputs, including first and second outputs for providing radio frequency signals to first and second antenna elements of the MIMO system respectively; and means for routing radio frequency signals, wherein the means for routing radio frequency signals is configured to route radio frequency signals from the first and second inputs to the first and second outputs respectively in a first mode of operation (which may be referred to as a "normal" mode of operation) and to route radio frequency signals from the second input to both the first and second outputs in a second mode of operation in which the first transmit chain is deactivated. In some example embodiments, a plurality of inputs, outputs and transmit chains are provided, wherein, in the first mode of operation, the means for routing radio frequency signals is configured to route radio frequency signals from each input to a corresponding output and, in the second mode of operation, at least one of the transmit chains is deactivated and at least one of the inputs is routed, by the means for routing radio frequency signals, to two or more of the outputs.

In some example embodiments, the means for routing radio frequency signals comprises: a first switching module for selecting between providing radio frequency signals from the first and second inputs at the first output of said apparatus. The means for routing radio frequency signals may further comprise a first phase control module (e.g. a phase shift module) for providing a phase-adjusted (e.g. phase shifted) version of radio frequency signals from the second input, wherein the first switching module is configured to select between providing radio frequency signals from the first input and the phase-adjusted (e.g. phase shifted) version of the radio frequency signals from the second input at the first output. Moreover, the means for routing radio frequency signals may further comprises a second switching module for selecting between providing the radio frequency signals from the second input and the phase-adjusted (e.g. phase shifted) radio frequency signals from the second input at the second output.

In some example embodiments, said means for routing said radio frequency signals is provided between power amplifier modules and said antenna elements of the MIMO system. Alternatively, said means for routing said radio frequency signals may be provided between baseband processing modules and power amplifier modules of the MIMO system.

In some example embodiments, signals of each transmit chain are routed (e.g. using splitter modules) to two or more antenna elements in the first mode of operation.

The apparatus may further comprise: third and fourth inputs for receiving radio frequency signals from third and fourth transmit chains of the MIMO system respectively; third and fourth outputs for providing radio frequency signals to third and fourth antenna elements of the MIMO system respectively; and a second means for routing radio frequency signals, wherein the second means for routing radio frequency signals is configured to route radio frequency signals from the third and fourth inputs to the third and fourth outputs respectively in the first mode of operation and to route radio frequency signals from the fourth input to both the third and fourth outputs in the second mode of operation in which the third transmit chain is deactivated.

In a second aspect, this specification describes an apparatus comprising: at least two inputs, including first and second inputs for receiving radio frequency signals from first and second antenna elements of a MIMO system respectively; at least two outputs, including first and second outputs for providing radio frequency signals to first and second receiver chains of the MIMO system respectively; and means for routing radio frequency signals, wherein the means for routing radio frequency signals is configured to route radio frequency signals from the first and second antenna elements to the first and second outputs respectively in a first mode of operation and to route radio frequency signals from both the first and second antenna elements to the second output in a second mode of operation in which the first receiver chain is deactivated. In some example embodiments, a plurality of inputs, outputs, antenna elements and receiver chains are provided, wherein, in the first mode of operation, the means for routing radio frequency signals is configured to route radio frequency signals from each input/antenna element to a corresponding output/receiver chain and, in the second mode of operation, at least one of the receiver chains is deactivated and at least one of the inputs/antenna element are routed, by the means for routing radio frequency signals, to common outputs/receiver chains. In some example embodiments, a plurality of inputs, outputs, receiver chains and antenna elements are provided, wherein, in the first mode of operation, the means for routing radio frequency signals is configured to route radio frequency signals from each antenna element to a corresponding output and, in the second mode of operation, at least one of the receiver chains is deactivated and inputs from multiple antenna elements are routed to at least one active receiver chain.

In some example embodiments, the means for routing radio frequency signals comprises a first switching module for selecting between providing radio frequency signals from the first antenna element to the first or second receiver chains.

The means for routing said radio frequency signals may be provided between baseband processing modules and power amplifier modules of the MIMO system. Alternatively, the means for routing said radio frequency signals may be provided between power amplifier modules and said antenna elements of the MIMO system.

The apparatus may further comprise: third and fourth inputs for receiving radio frequency signals from third and fourth antenna elements of the MIMO system respectively; third and fourth outputs for providing radio frequency signals to third and fourth receiver chains of the MIMO system respectively; and a second means for routing radio frequency signals, wherein the second means for routing radio frequency signals is configured to route radio frequency signals from the third and fourth antenna elements to the third and fourth receiver outputs respectively in the first mode of operation and to route radio frequency signals from both the third and fourth antenna elements to the fourth output in the second mode of operation in which the third transmit chain is deactivated.

In a third aspect, this specification describes a MIMO transceiver comprising: a first transceiver chain; a second transceiver chain; first and second antenna elements; a first radio frequency module comprising: at least two inputs, including first and second inputs for receiving radio frequency signals from the first and second transceiver chains respectively in a transmit mode of operation; at least two outputs, including first and second outputs for providing radio frequency signals to the first and second antenna elements respectively; and first means for routing radio frequency signals, wherein the first means for routing radio frequency signals is configured to route radio frequency signals from the first and second inputs to the first and second outputs respectively in a first mode of operation and to route radio frequency signals from the second input to both the first and second outputs in a second mode of operation in which the first transceiver chain is deactivated; and a second radio frequency module comprising: at least two inputs, including first and second inputs for receiving radio frequency signals from the first and second antenna elements respectively in a receive mode of operation; at least two outputs, including first and second outputs for providing radio frequency signals to the first and second transceiver chains respectively; and second means for routing radio frequency signals, wherein the second means for routing radio frequency signals is configured to route radio frequency signals from the first and second antenna elements to the first and second outputs respectively in the first mode of operation and to route radio frequency signals from both the first and second antenna elements to the second output in the second mode of operation. As discussed above, more transceiver chains and/or antenna elements may be provided. The MIMO transceiver of the third aspect may further comprise one or more of the features of the first and second aspects described above.

In a fourth aspect, this specification describes a method comprising: receiving radio frequency signals from first and second transmit chains of a MIMO system at first and second inputs of a radio frequency module respectively, wherein said radio frequency module includes at least two inputs; providing first and second outputs of the radio frequency module to first and second antenna elements of the MIMO system respectively, wherein said radio frequency module includes at least two outputs; routing radio frequency signals from the first and second inputs to the first and second outputs respectively in a first mode of operation; and routing radio frequency signals from the second input to both the first and second outputs in a second mode of operation in which the first transmit chain is deactivated. In some example embodiments, a plurality of inputs, outputs and transmit chains are provided, wherein, in the first mode of operation, radio frequency signals are routed from each input to a corresponding output and, in the second mode of operation, at least one of the transmit chains is deactivated and at least one of the inputs is routed to two or more of the outputs.

In some example embodiments, signals of each transmit chain are routed to two or more antenna elements in the first mode of operation.

The method may further comprise: receiving radio frequency signals from third and fourth transmit chains of the MIMO system at third and fourth inputs of the radio frequency module respectively; providing third and fourth outputs of the radio frequency module to third and fourth antenna elements of the MIMO system respectively; routing radio frequency signals from the third and fourth inputs to the third and fourth outputs respectively in the first mode of operation; and routing radio frequency signals from the fourth input to both the third and fourth outputs in the second mode of operation in which the third transmit chain is deactivated.

In a fifth aspect, this specification describes a method comprising: receiving radio frequency signals from first and second antenna elements of a MIMO system at first and second inputs of a radio frequency module respectively, wherein said radio frequency module includes at least two inputs; providing radio frequency signals to first and second receiver chains of the MIMO system respectively via first and outputs of the radio frequency module, wherein radio frequency module includes at least two outputs; and routing radio frequency signals from the first and second antenna elements to the first and second outputs respectively in a first mode of operation and routing radio frequency signals from both the first and second antenna elements to the second output in a second mode of operation in which the first receiver chain is deactivated. In some example embodiments, a plurality of inputs, outputs, antenna elements and receiver chains are provided, wherein, in the first mode of operation, the radio frequency signals are routed from each input/antenna element to a corresponding output/receiver chain and, in the second mode of operation, at least one of the receiver chains is deactivated and at least one of the inputs/antenna element are routed to common outputs/receiver chains.

The radio frequency module may further comprise: third and fourth inputs for receiving radio frequency signals from third and fourth antenna elements of the MIMO system respectively; and third and fourth outputs for providing radio frequency signals to third and fourth receiver chains of the MIMO system respectively. Radio frequency signals from the third and fourth antenna elements may be routed to the third and fourth receiver outputs respectively in the first mode of operation. Moreover, radio frequency signals may be routed from both the third and fourth antenna elements to the fourth output in the second mode of operation in which the third transmit chain is deactivated.

In a sixth aspect, this specification describes computer-readable instructions which, when executed by a computing apparatus, cause the computing apparatus to perform (at least) any method as described herein (including the methods of the fourth and fifth aspects described above).

In a seventh aspect, this specification describes a computer-readable medium (such as a non-transitory computer-readable medium) comprising program instructions stored thereon for performing (at least) any method as described herein (including the methods of the fourth and fifth aspects described above).

In an eighth aspect, this specification describes an apparatus comprising: at least one processor; and at least one memory including computer program code which, when executed by the at least one processor, causes the apparatus to perform (at least) any method as described herein (including the methods of the fourth and fifth aspects described above).

In a ninth aspect, this specification describes a computer program comprising instructions which, when executed by an apparatus, cause the apparatus to: receive radio frequency signals from first and second transmit chains of a MIMO system at first and second inputs of a radio frequency module respectively, wherein said radio frequency module includes at least two inputs; provide first and second outputs of the radio frequency module to first and second antenna elements of the MIMO system respectively, wherein said radio frequency module includes at least two outputs; route radio frequency signals from the first and second inputs to the first and second outputs respectively in a first mode of operation; and route radio frequency signals from the second input to both the first and second outputs in a second mode of operation in which the first transmit chain is deactivated.

In a tenth aspect, this specification describes a computer program comprising instructions which, when executed by an apparatus, cause the apparatus to: receive radio frequency signals from first and second antenna elements of a MIMO system at first and second inputs of a radio frequency module respectively, wherein the radio frequency module includes at least two input; provide first and second outputs of the radio frequency signals to first and second receiver chains of the MIMO system respectively, wherein the radio frequency module includes at least two output; route radio frequency signals from the first and second antenna elements to the first and second outputs respectively in a first mode of operation; and route radio frequency signals from both the first and second antenna elements to the second output in a second mode of operation in which the first receiver chain is deactivated.

In an eleventh aspect, this specification describes an apparatus comprising (at least) first and second inputs (or some other means) for receiving radio frequency signals from first and second transmit chains of a MIMO system respectively; (at least) first and second output (or some other means) for providing radio frequency signals to first and second antenna elements of the MIMO system respectively; a routing module (or some other means) for routing radio frequency signals from the first and second inputs to the first and second outputs respectively in a first mode of operation; and the routing module (or some other means) for routing radio frequency signals from the second input to both the first and second outputs in a second mode of operation in which the first transmit chain is deactivated.

In a twelfth aspect, this specification describes an apparatus comprising (at least) first and second inputs (or some other means) for receiving radio frequency signals from first and second antenna elements of a MIMO system respectively; (at least) first and second outputs (or some other means) for providing radio frequency signals to first and second receiver chains of the MIMO system respectively; a routing module (or some other means) for routing radio frequency signals from the first and second antenna elements to the first and second outputs respectively in a first mode of operation; and the routing module (or some other means) for routing radio frequency signals from both the first and second antenna elements to the second output in a second mode of operation in which the first receiver chain is deactivated.

**Brief description of the drawings**

Example embodiments will now be described, by way of example only, with reference to the following schematic drawings, in which:

FIGS. 1 to 4 are block diagrams of systems in accordance with example embodiments;
FIG. 5 is a flow chart showing an algorithm in accordance with an example embodiment;
FIG. 6 is a flow chart showing an algorithm in accordance with an example embodiment;
FIG. 7 is a block diagram of a system in accordance with an example embodiment;
FIG. 8 is a block diagram of a module in accordance with an example embodiment;
FIG. 9 is a block diagram of a system in accordance with an example embodiment;
FIG. 10 is a flow chart showing an algorithm in accordance with an example embodiment;
FIG. 11 is a block diagram of a module in accordance with an example embodiment;
FIGS. 12 to 17 are block diagrams of systems in accordance with example embodiments;
FIG. 18 is a block diagram of components of a system in accordance with an example embodiment; and
FIG. 19 shows an example of tangible media for storing computer-readable code which when run by a computer may perform methods according to example embodiments described above.

## Detailed description

The scope of protection sought for various embodiments of the disclosure is set out by the independent claims. The embodiments and features, if any, described in the specification that do not fall under the scope of the independent claims are to be interpreted as examples useful for understanding various embodiments of the disclosure.

In the description and drawings, like reference numerals refer to like elements throughout.

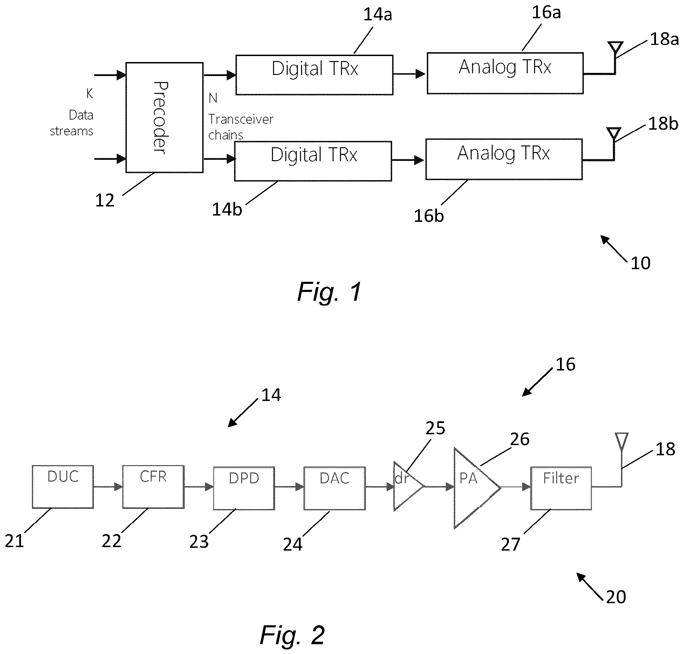

FIG. 1 is a block diagram of a system, indicated generally by the reference numeral 10, in accordance with an example embodiment. The system 10 is a simplified example of a MIMO system.

The system 10 comprises a precoder 12, a plurality of transceiver chains each having a digital part and an analog part (a first transceiver chain having a digital part 14a and analog part 16a, and a second transceiver chain having a digital part 14b and an analog part 16b are shown in FIG 1), and a plurality of antenna elements 18a, 18b. Although two radio frequency chains are shown in FIG. 1, example embodiments may include many more radio frequency chains.

The system 10 may be used, for example, as part of a 5G massive MIMO (Multiple Inputs Multiple Output) radio unit. The size of such a radio unit (e.g. the number of RF transceiver chains 14, 16 and antenna elements 18, the silicon size of power amplifiers used, digital processing complexity etc.) is linked to the maximum capacity of the apparatus, which may be defined in terms of maximum Effective Isotropic Radiated Power (EIRP), maximum number of instantaneous beams, maximum RF signal bandwidth etc. However, radio systems such as the system 10 do not generally operate at maximum capacity at all times (or even most of the time). Energy efficiency considerations need to take into account not only efficiency at maximum capacity, but also efficiency at other capacity levels (e.g. between 0 and 100% capacity).

Some example embodiments described herein seek to provide high efficiency MIMO system at moderate or low load conditions. This may have advantages in terms of reduced operating costs (OPEX), reduced carbon footprint for operators, and higher hardware lifetime.

FIG. 2 is a block diagram of a system, indicated generally by the reference numeral 20, in accordance with an example embodiment. The system 20 shows an example implementation of the digital parts 14 and analog parts 16 of the transceiver chains described above, together with an antenna element 18.

As shown in FIG. 2, the example transceiver chain comprises a digital up-converter (DUC) 21, a Crest Factor Reduction (CRF) module 22, and a Digital Predistortion (DPD) module 23 that form the digital part 14 of the transceiver, a digital-to-analog converter (DAC) 24, a driver 25, a power amplifier 26 and filter 27 that form the analog part 16.

The digital resources (including the precoder 12, DUC 21, CFR module 22 and the DPD module 23) are provided to shape the RF signal for the purposes of amplification by the power amplifier 26 (which power amplifier typically consumes most of the energy in the transceiver chain). The efficiency curve of the power amplifier 26 is not flat but is typically maximised close to saturation and decreases with backoff.

Many mobile communication systems (e.g. 4G, 5G and 6G systems) do not have digital power control in the transceiver. The downlink power is typically linear with cell load, which results in the transmitted power at moderate load conditions being lower than at higher load conditions. Thus, power amplifier efficiency is typically lower at moderate load conditions than at high load conditions.

In full load conditions, the CFR module 22 can be used to reduce the backoff, whilst the DPD module 23 can be used to compensate for non-linearities introduced by power amplifier saturation. More complex power amplifier architectures can be provided having higher efficiency (e.g. class AB/C/E/F, Doherty, etc.) but this is typically at the cost of increased digital resources.

In lower load conditions, a number of approaches can be used to seek to increase efficiency. One approach is muting, in which one or more transceiver chains are deactivated to reduce power consumption in some specific conditions, as discussed further below.

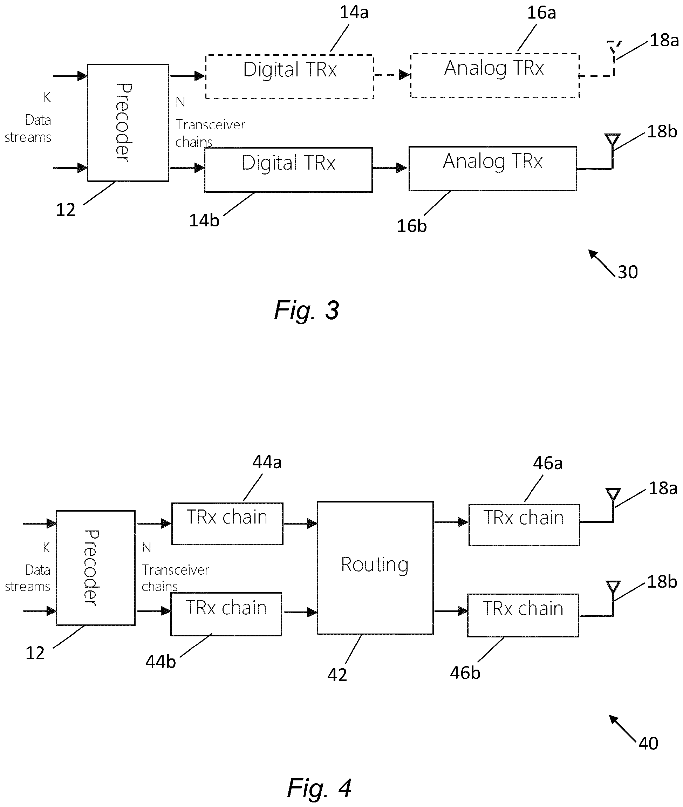

FIG. 3 is a block diagram of a system, indicated generally by the reference numeral 30, in accordance with an example embodiment. The system 30 shows the system 10 described above, in which the first transceiver chain including the digital part 14a and analog part 16a is deactivated (i.e. "muted").

The muting of one or more transceiver chains may be dynamically controlled according to a scheduler decision, with a specific bias circuit to switch each block on and off. This can result in significant energy savings for both digital and analog resources in low load conditions. However, such muting typically suffers from a limitation in line with the RF architecture. Antenna array (AA) gain is linear with antenna element (AE) count according to the formula:

$$AA\ gain = 10.log10(\#AE) + 10.log10(AE\ gain) \qquad (1)$$

For example:

• A 32 antenna element array can show a gain of 10.log(32)+6=21dBi
• Half array gain is 21-3=18dBi

In downlink, EIRP (Effective Isotropic Radiated Power) is the sum in dB of TRP (Transmitted Radiated Power) and antenna array gain.

$$TRP = 10.log(\#TRx) + 10log10(TRx\ element\ power) \qquad (2)$$

$$EIRP = TRP + AA\ gain \qquad (3)$$

Assuming the same count for both the transceiver and antenna element, the (2) formula becomes:

$$EIRP = 20.log(\#TRx) + 10.log10(AE\ gain) \qquad (4)$$

In other words, there is a relationship between RF transceiver count and EIRP (Effective Isotropic Radiated Power). For example:

• 32 transceivers, delivering 1W each, with 32 antenna elements, gives an EIRP of 66dBm

• 16 transceivers, also delivering 1W each, with 16 elements, gives an EIRP of only 60dBm

Thus, halving the transceiver/antenna count (e.g. using muting) impacts EIRP by 6dB.

Considering a fixed baseband beamforming MIMO machine, assuming digital resources are consistent (e.g. spatial resources determined by the precoder/beamformer), EIRP can be considered as a linear KPI (Key Performance Indicator) to determine capacity (throughput) of the system. An unexpected additional 3dB EIRP reduction may damage cell coverage, particularly for users at the cell edge with reduced SINR (Signal to Noise-and-Interference Ratio).

The same phenomenon is also applicable in uplink with a balanced downlink/uplink link budget.

FIG. 4 is a block diagram of a system, indicated generally by the reference numeral 40, in accordance with an example embodiment.

The system 40 comprises the precoder 12 and the plurality of antenna elements 18a, 18b of the system 10 described above, a plurality of transceiver chains (a first transceiver chain having a first part 44a and a second part 46a, and a second transceiver chain having a first part 44b and a second part 46b are shown in FIG 4, although, as noted above, example embodiments may include many more radio frequency chains), and a routing module 42 provided within the transceiver chains.

The first parts 44a, 44b and second parts 46a, 46b may be the digital and analog portions discussed above, but this is not essential. The routing module 42 could be provided as part of digital portions of the transceiver chains or as part of analog portions of the transceiver chains. Thus, the first parts 44a, 44b and second parts 46a, 46b may be split differently to the digital portions 14a, 14b and analog portions 16a, 16b described above. For example, the second parts 46a, 46b may comprise filter modules, with other analog portions being provided with the first parts 44a, 44b.

As described in detail below, the routing module 42 comprises first and second inputs and first and second outputs (although example embodiments could include more than two inputs and outputs). The routing module 42 is configured to route radio frequency signals received at the first and second inputs to the first and second outputs respectively in a first mode of operation and to route radio frequency signals from the second input to both the first and second outputs in a second mode of operation in which the first transmit chain is deactivated. The first mode of operation may be a "normal" mode of operation and the second mode of operation may be a "muting" or "power saving" mode of operation.

It should be noted that whilst the routing module 42 is described as forming part of a transmitter arrangement, the routing module (or a separate routing module) may form part of a receiver arrangement in which signals are received at the antenna elements and routed to the transceiver chains via the routing module, as discussed further below.

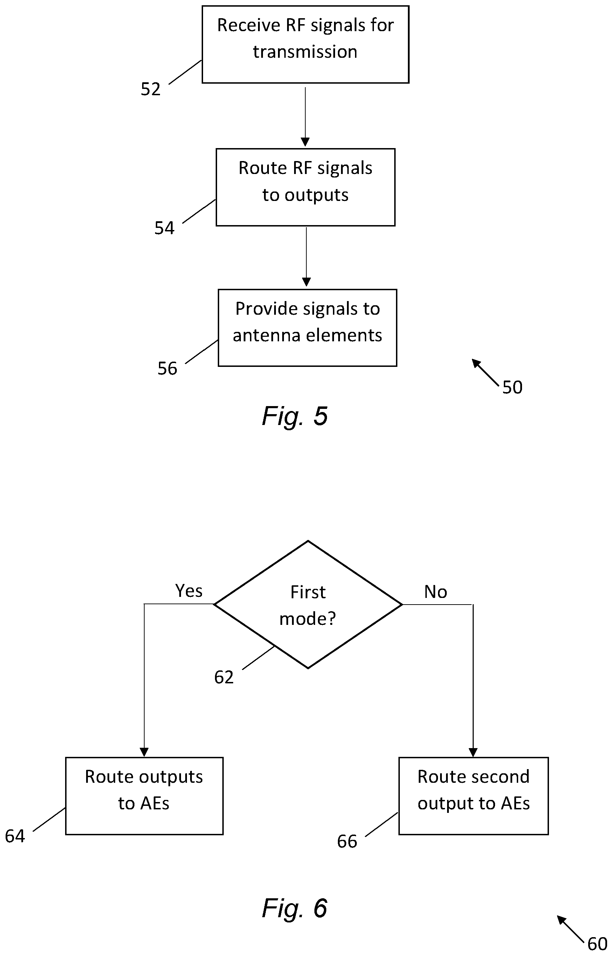

FIG. 5 is a flow chart showing an algorithm, indicated generally by the reference numeral 50, in accordance with an example embodiment. The algorithm 50 may be implemented by the routing module 42 of the system 40 described above.

The algorithm 50 starts at operation 52, where radio frequency signals for transmission are received. Radio frequency signals may be received at the routing module 42 from one or more of the transceiver chains 44 of the system 40.

At operation 54 of the algorithm 50, radio frequency signals are routed from the inputs of routing module 42 to the outputs of the routing module.

At operation 56 of the algorithm 50, the radio frequency signals output by the routing module are provided to antenna elements for transmission (e.g. by the antenna elements 18 of the system 40). The radio frequency signals may be routed via the second transceiver chain parts 46 (e.g. filter modules).

The algorithm 50 relates to the routing of signals for transmission by the antenna elements 18. A similar algorithm could be provided for the routing of signals received by the antenna elements, as discussed further below.

FIG. 6 is a flow chart showing an algorithm, indicated generally by the reference numeral 60, in accordance with an example embodiment. The algorithm 60 may be used to implement the operation 54 of the algorithm 50 described above.

The algorithm 60 starts at operation 62 where a determination is made regarding whether or not the system is operating in a first mode (e.g. a normal mode operation, rather than a "muting" mode of operation). If so, the algorithm 60 moves to operation 64, where radio frequency signals received at the first and second inputs of the routing module are routed to the first and second outputs of the routing module respectively. If the system is not operating in the first mode, then the algorithm 60 moves from operation 62 to operation 66, where radio frequency signals received from the second input of the routing module are routed to both the first and second outputs of the routing module (and the other transmit chain is deactivated).

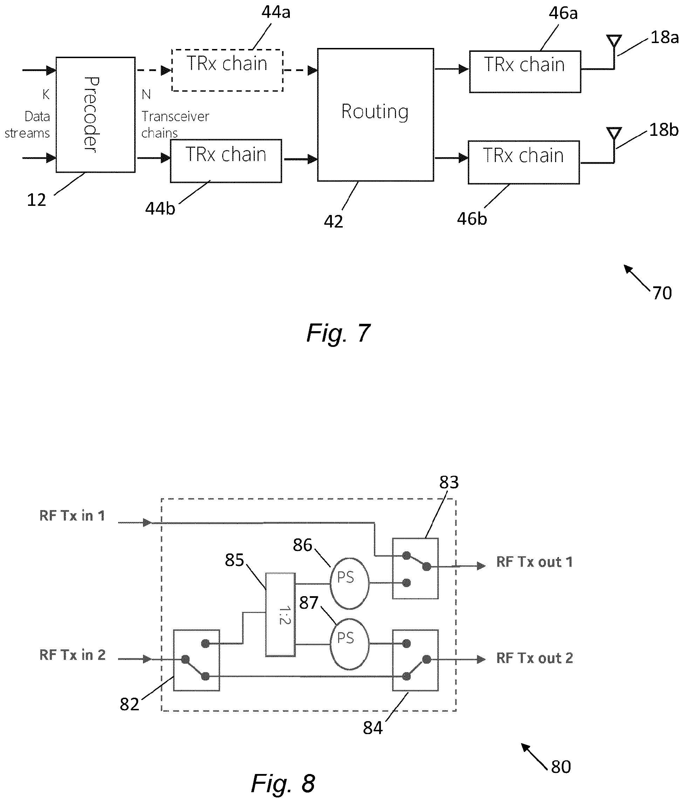

FIG. 7 is a block diagram of a system, indicated generally by the reference numeral 70, in accordance with an example embodiment. The system 70 shows the system operating in the second mode, with at least the first portion 44a of the first transceiver chain is deactivated. Note that unlike in the system 30, the first antenna element 18a is not deactivated.

The routing module 42 enables the same number of antenna elements to be in operation (thereby maintaining antenna element gain), whilst enabling some or all of a transceiver chain (the first transceiver chain portion 44a in this example) to be activated and deactivated (e.g. based on load situations). Thus, the number of transceiver chains that is operational can be decoupled from the number of antenna arrays being used, thereby recovering linear function according to 10.log(number of transceivers) rule outlined above.

FIG. 8 is a block diagram of a module, indicated generally by the reference numeral 80, in accordance with an example embodiment. The module 80 is a transmitter module having first and second inputs (RF Tx In 1 and RF Tx In 2 respectively) and first and second outputs (RF Tx Out 1 and RF Tx Out 2 respectively). The module 80 is an example implementation of the routing module 42 described above.

The module 80 comprises a first switching module 82, a second switching module 83, a third switching module 84, a splitter 85, a first phase control module (such as a phase shifter) 86 and a second phase control module (such as a phase shifter) 87. The module 80 is highly schematic and more circuit elements may be provided in example embodiments.

The first switching module 82 selects between providing radio frequency signals from the second input (RF Tx In 2) to the third switching module 84 or to the splitter 85. If the radio frequency signals from the second input are provided to the splitter 85, then the splitter 85 provides those RF signals to both the first phase control module 86 and the second phase control module 87.

The second switching module 83 selects between outputting radio frequency signals from the first input (as obtained directed from the first input RF Tx In 1) or a phase-adjusted (e.g. phase shifted) version of the second input (as obtained from the first phase control module 86). The output of the second switching module 83 is provided to the first output (RF Tx Out 1) of the module 80.

The third switching module 84 selects between outputting radio frequency signals from the second input (as obtained directed from the second input RF Tx In 2) or a phase-adjusted (e.g. phase shifted) version of the second input (as obtained from the second phase control module 87). The output of the third switching module 84 is provided to the second output (RF Tx Out 2) of the module 80.

Thus, in the first mode, the module 80 couples the inputs RF Tx In 1 and Rx Tx In 2 to the outputs RF Tx Out 1 and RF Tx Out 2 respectively. In the second mode, the module 80 couples the input RF Tx In 2 to both of the outputs (so that the input RF Tx In 1 can be muted).

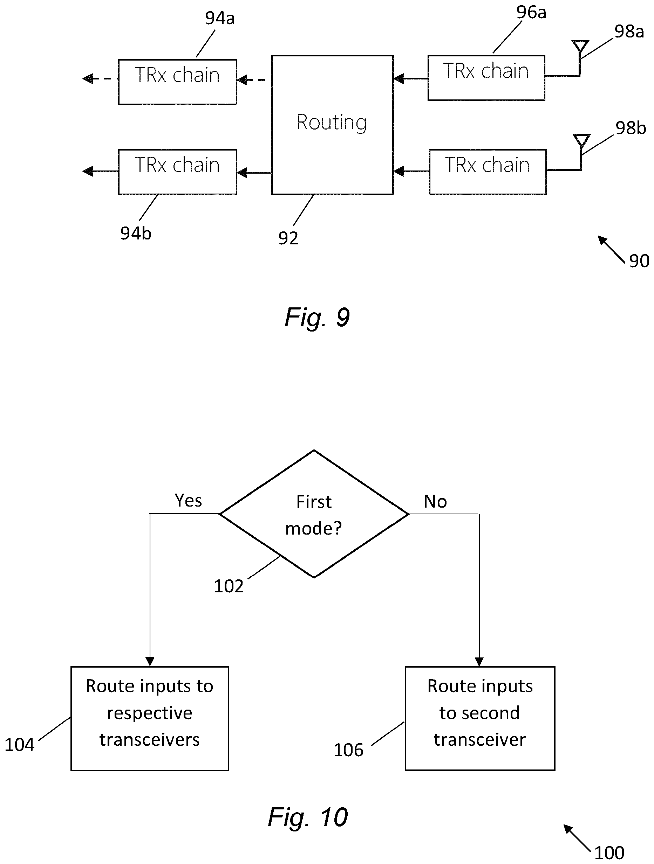

FIG. 9 is a block diagram of a system, indicated generally by the reference numeral 90, in accordance with an example embodiment. The system 90 shows the transceiver described above operating as a receiver. The system comprises a routing module 92, a first transceiver chain (comprising a first part 94a and a second part 94b that may the first and second parts 44a and 46a described above), a second transceiver chain (comprising a first part 94a and a second part

**EP 4 583 418 A1**

96b that may be the first and second parts 44b and 46b described above)and a first antenna element 98a and a second antenna element 98b (that may be the first and second antenna elements 18a and 18b described above).

The routing module 92 comprises first and second inputs for receiving radio frequency signals from the first and second antenna elements 98a and 98b respectively. The routing module 92 also comprises first and second outputs for providing radio frequency signals to first parts of the first and second receiver chains of the MIMO system respectively (the first parts 94a and 94b). In a similar manner to the routing module 42 described above, the routing module 92 routes radio frequency signals from the first and second antenna elements 98a, 98b to the first and second outputs respectively in a first mode of operation (e.g. normal mode) and routes radio frequency signals from both the first and second antenna elements to the second output in a second mode of operation in which the first receiver chain is deactivated. The first parts 94a of the first transceiver module is shown in dotted form in FIG. 9 indicated that that transceiver module may be deactivated.

FIG. 10 is a flow chart showing an algorithm, indicated generally by the reference numeral 100, in accordance with an example embodiment. The algorithm 100 may be implemented using the system 90 described above.

The algorithm 100 starts at operation 102 where a determination is made regarding whether or not the system is operating in a first mode (e.g. a normal mode operation, rather than a "muting" mode of operation). If so, the algorithm 100 moves to operation 104, where radio frequency signals received from the first and second antenna elements are routed to the first and second transceiver chains 94a and 94b respectively. If the system is not operating in the first mode, then the algorithm 100 moves from operation 102 to operation 106, where radio frequency signals received from the antenna elements are routed to the second transceiver chain 94b (and the first transceiver chain 94a can be deactivated). The criteria applied by the algorithm 100 may be same as the criteria applied by the algorithm 60 described above. Moreover, in some example embodiments, the algorithms 60 and 100 may be implemented within the same system (e.g. by the same circuitry or by different circuitry).

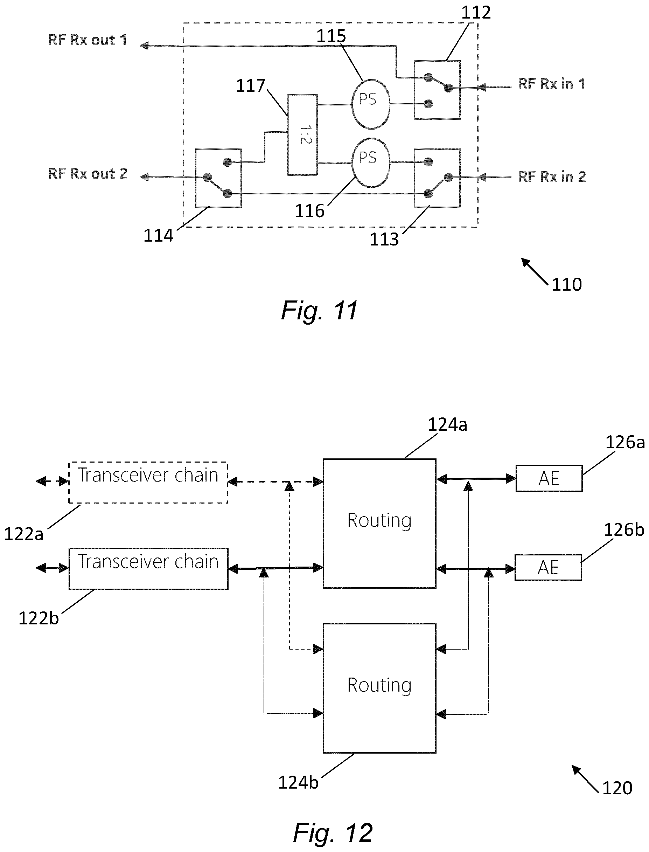

FIG. 11 is a block diagram of a module, indicated generally by the reference numeral 110, in accordance with an example embodiment. The module 110 is a receiver module having first and second inputs (RF Rx In 1 and RF Rx In 2 respectively) and first and second outputs (RF Rx Out 1 and RF Rx Out 2 respectively). The module 110 is an example implementation of the routing module 92 described above and can be used to implement the algorithm 100.

The module 110 comprises a first switching module 112, a second switching module 113, a third switching module 114, a first phase control module (e.g. phase shifter) 115, a second phase control module (e.g. phase shifter) 116, and a combiner 117.

The first switching module 112 selects between providing radio frequency signals from the first input (RF Rx In 1) to the first output (RF Rx Out 1) or to the first phase control module 115. If the radio frequency signals from the first input are provided to the first phase control module 115, then the first phase control module provides those RF signals to the combiner 117.

The second switching module 113 selects between providing radio frequency signals from the second input (RF Rx In 2) to the second phase control module 116 or to the third switching module 114. If the radio frequency signals from the second input are provided to the second phase control module 116, then the second phase control module provides those RF signals to the combiner 117.

If the radio frequency signals from the second input are provided to the third switching module 114, then the third switching module provides those radio frequency signals to the second output of the module 100 (RF Rx Out 2). Otherwise, the third switching module 114 provides the output of the combiner 117 (i.e. the combined inputs RF Rx In 1 and RF Rx In 2) as the second output of the module 110.

Thus, the modules 80 and 110 can be used to dynamically map RF front end analog resources and antenna array as a downlink and uplink configurable matrices.

The systems described above seek to decouple the transceiver RF front end and antenna elements in order to address the problem of nonlinear function, moving from

$$EIRP = 20.\log(\#TRx) + 10.\log10(AE\ gain) \qquad (4)$$

to:

$$EIRP \sim 10.\log(\#TRx) + 10.\log10(AE\ gain) \qquad (5)$$

Note that the modules 80 and 110 may further comprises one or more tuneable elements (e.g. attenuator(s) for amplitude control) to compensate the potential defaults of the whole circuit after integration that calibration cannot address, then to improve the global performances of the system with better similarities between each transceiver branch.

It should be noted that example systems in accordance with the principles described herein may have separate routing modules for transmission and reception.

FIG. 12 is a block diagram of a system, indicated generally by the reference numeral 120, comprising a first transceiver chain 122a, a second transceiver chain 122b, a first routing module 124a, a second routing module 124b, first antenna element(s) 126a and second antenna elements 126b.

In a first transmitting mode, the first router 124a routes RF signals from the first and second transceiver chains to the first and second antenna elements respectively. Similar, in a first receiving mode, the second router 124b routes RF signals from the first and second antenna elements to the first and second transceiver chains respectively.

In a second transmitting mode, the first transceiver chain 122a is deactivated and the first routing module 124a routes RF signals from the second transceiver chain 122b to both the first and second antenna elements. Similarly, in a second receiving mode, the second route 124b routes RF signals from both the first and second antenna elements to the second transceiver chain.

Note that whilst the routing modules 124a and 124b are shown between the transceiver chains and the antenna elements, the routing modules could be provided at any part of the transceiver chains (e.g. as part of a digital portion of the transceiver chains or as part of an analog portion of the transceiver chains). Note also that although two channels are shown, any number of channels could be provided (and the routing modules could have more than two inputs and outputs).

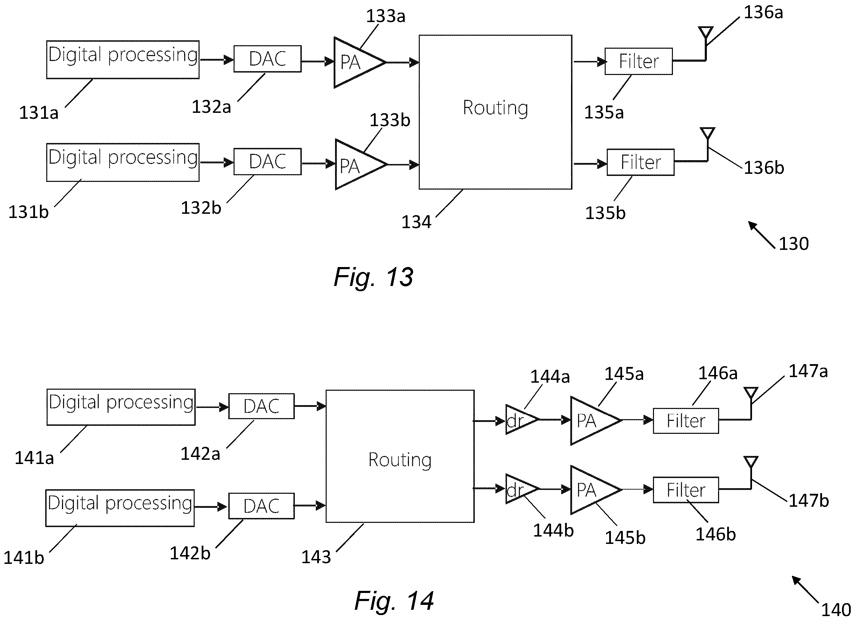

FIG. 13 is a block diagram of a system, indicated generally by the reference numeral 130, in accordance with an example embodiment. The system 130 comprises a first transceiver chain comprising a first digital processing module 131a, a first digital-to-analog converter 132a and a first power amplifier 133a, a second transceiver chain comprising a second digital processing module 131b, a second digital-to-analog converter 132b and a second power amplifier 133b. The system 130 further comprising a routing module 134, a first filter module 135a and antenna 136a, and a second filter module 135b and antenna 136b.

In the system 130, the routing module 134 is provided between the power amplifier modules 133a, 133b and the antenna elements 136a and 136b of the MIMO system. Thus, the routing module 134 forms part of the analog processing part of the system.

FIG. 14 is a block diagram of a system, indicated generally by the reference numeral 140, in accordance with an example embodiment. The system 140 comprises a first transceiver chain comprising a first digital processing module 141a and a first digital-to-analog converter 142a, a second transceiver chain comprising a second digital processing module 141b and a second digital-to-analog converter 142b, a routing module 143, a first output stage comprising a first driver 144a, a first power amplifier 145a, a first filter module 146a and antenna 147a, and a second output stage comprising a second driver 144b, a second power amplifier 145b, a second filter module 146b and antenna 147b.

In the system 140, the routing module 143 is provided between baseband processing modules and power amplifier modules of the MIMO system.

Thus, routing modules such as the routing modules 42 and 92 described above can be inserted in either before the power amplification stage (as in the system 140) or after the power amplification stage (as in the system 130). Each has advantages and disadvantages, as discussed further below. Moreover, the routing module could in some example embodiments, be provided elsewhere (e.g. as part of the digital processing modules).

The first option shown in FIG. 13 (in which the routing module 134 is provided between the power amplifier stage and the antenna elements) offers low energy savings (of the order of 5% in one example implementation) in half beam condition and more flexibility to switch off the power amplifier, which is the most power consuming part of the transceiver chain. However, as the routing module is located at the power amplifier output, the circuit may induce some corner effect on both power amplifier sizing.

The second option shown in FIG. 14 (in which the routing module 143 is provided between the digital processing modules and the power amplifier) shows much better energy savings (of the order of 8% in half beam, and of the order of 32% in quarter beam conditions in example implementations), and is generally easier to design and implement. The corner effect mentioned above is on digital side with single DPD to linearize multiple power amplifiers as for a conventional hybrid MIMO.

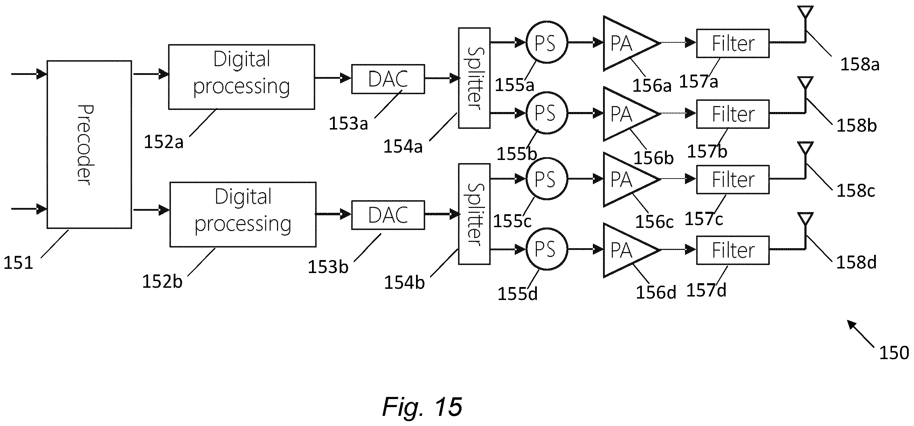

FIG. 15 is a block diagram of a system, indicated generally by the reference numeral 150, in accordance with an example embodiment.

The system comprises a precoder 151, digital processing modules 152a and 152b, DACs 153a and 153b, splitters 154a and 154b, phase control modules 155a to 155d, power amplifiers 156a to 156d, filters 157a to 157d and antenna elements 158a to 158d. The system therefore enables each transmit chain to be routed to two or more antenna elements (using splitters 154a and 154b).

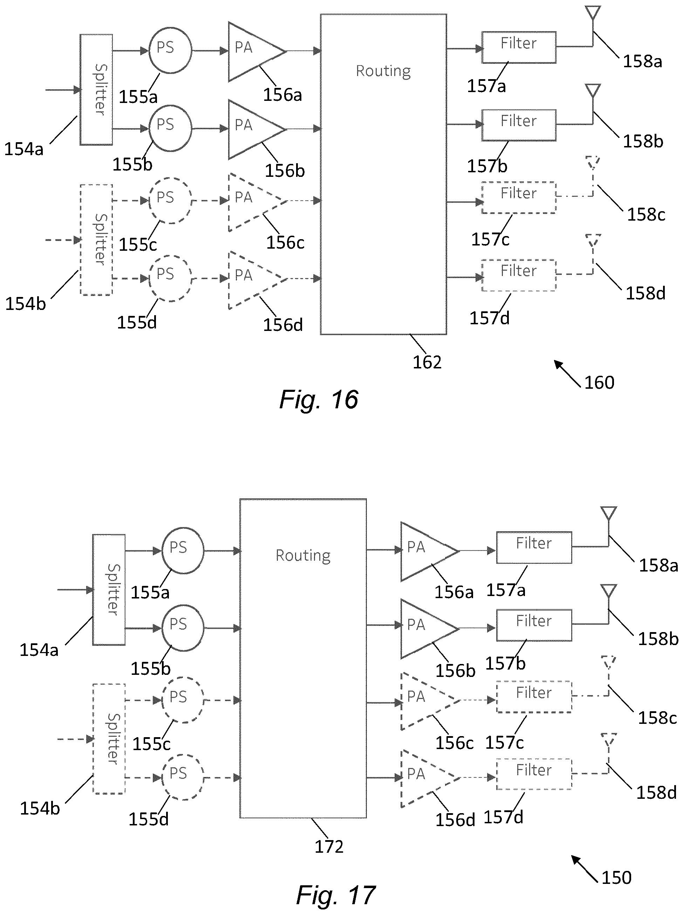

FIG. 16 is a block diagram of a system, indicated generally by the reference numeral 160, in accordance with an example embodiment. The system 160 includes the splitters 154, phase control modules 155, power amplifiers 156, filters 157 and antenna elements 158 of the system 150 described above and additional comprises a routing module 162 between the power amplifiers and the filters/antenna elements.

In common with the routing elements described above, the routing elements enables the outputs of each transmit chain to be provided to a respective antenna element in a first (normal) mode of operation, but enables one split transmit chain (the outputs of the power amplifiers 156c and 156d in this example) to be muted by transferred the RF outputs of the first power amplifier 156a to the first and third antenna elements and the RF outputs of the second power amplifier 156b to the second and fourth antenna elements.

FIG. 17 is a block diagram of a system, indicated generally by the reference numeral 170, in accordance with an example embodiment. The system 160 includes the splitters 154, phase control modules 155, power amplifiers 156, filters 157 and antenna elements 158 of the systems 150 160 described above and additional comprises a routing module 172. The routing element 172 differs from the routing element of the system 162 in that it is provided before the power amplifier stages.

Many variants of the systems described above are possible. For example, although transceivers having two ports are described (i.e. having two transceivers and two antenna elements), the principles described herein are applicable to systems having more ports (e.g. four transceivers and four antenna elements, or eight transceivers and eight antenna elements etc.)

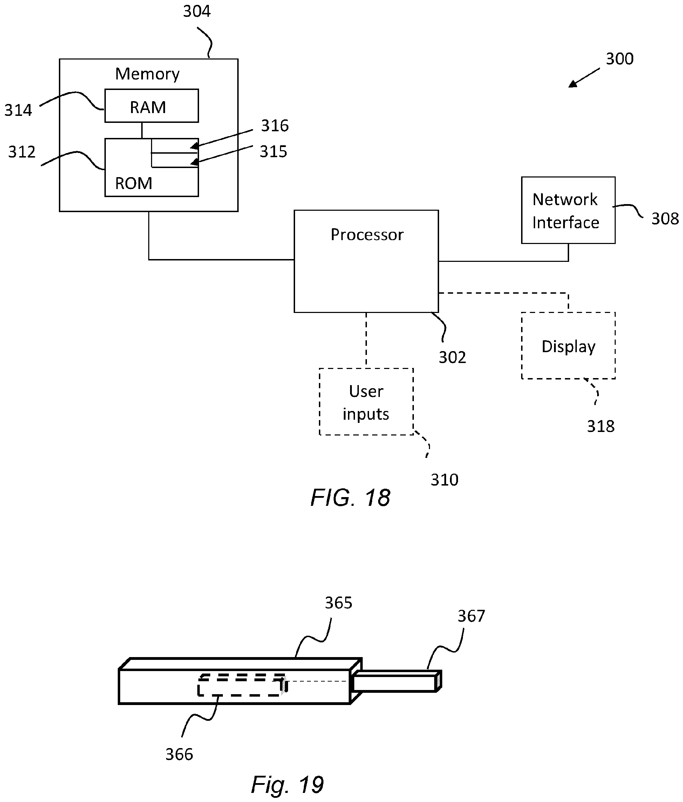

For completeness, FIG. 18 is a schematic diagram of components of one or more of the example embodiments described previously, which hereafter are referred to generically as a processing system 300. The processing system 300 may, for example, be the apparatus referred to in the claims below.

The processing system 300 may have a processor 302, a memory 304 closely coupled to the processor and comprised of a RAM 314 and a ROM 312, and, optionally, a user input 310 and a display 318. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms 50, 60 and 100 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

FIG. 19 shows a tangible media, in the form of a removable memory unit 365, storing computer-readable code which when run by a computer may perform methods according to example embodiments described above. The removable memory unit 365 may be a memory stick, e.g. a USB memory stick, having internal memory 366 storing the computer-readable code. The internal memory 366 may be accessed by a computer system via a connector 367. Of course, other forms of tangible storage media may be used, as will be readily apparent to those of ordinary skilled in the art. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams and sequences of Figures 5, 6 and 10 are examples only and that various operations depicted therein may be omitted, reordered and/or combined.

It will be appreciated that the above-described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

**Claims**

1. An apparatus comprising:

   at least two inputs, including first and second inputs for receiving radio frequency signals from first and second transmit chains of a MIMO system respectively;
   at least two outputs, including first and second outputs for providing radio frequency signals to first and second antenna elements of the MIMO system respectively; and
   means for routing radio frequency signals, wherein the means for routing radio frequency signals is configured to route radio frequency signals from the first and second inputs to the first and second outputs respectively in a first mode of operation and to route radio frequency signals from the second input to both the first and second outputs in a second mode of operation in which the first transmit chain is deactivated.

2. An apparatus as claimed in claim 1, wherein the means for routing radio frequency signals comprises:
   a first switching module for selecting between providing radio frequency signals from the first and second inputs at the first output of said apparatus.

3. An apparatus as claimed in claim 2, wherein the means for routing radio frequency signals further comprises:
   a first phase control module for providing a phase-adjusted version of radio frequency signals from the second input, wherein the first switching module is configured to select between providing radio frequency signals from the first input and the phase-adjusted version of the radio frequency signals from the second input at the first output.

4. An apparatus as claimed in claim 3, wherein the means for routing radio frequency signals further comprises:
   a second switching module for selecting between providing the radio frequency signals from the second input and the phase-adjusted radio frequency signals from the second input at the second output.

5. An apparatus as claimed in any one of claims 1 to 4, wherein said means for routing said radio frequency signals is provided between power amplifier modules and said antenna elements of the MIMO system.

6. An apparatus as claimed in any one of claims 1 to 4, wherein said means for routing said radio frequency signals is provided between baseband processing modules and power amplifier modules of the MIMO system.

7. An apparatus as claimed in any one of the preceding claims, wherein signals of each transmit chain are routed to two or more antenna elements in the first mode of operation.

8. An apparatus as claimed in any one of the preceding claims, further comprising:

   third and fourth inputs for receiving radio frequency signals from third and fourth transmit chains of the MIMO system respectively;

third and fourth outputs for providing radio frequency signals to third and fourth antenna elements of the MIMO system respectively; and

a second means for routing radio frequency signals, wherein the second means for routing radio frequency signals is configured to route radio frequency signals from the third and fourth inputs to the third and fourth outputs respectively in the first mode of operation and to route radio frequency signals from the fourth input to both the third and fourth outputs in the second mode of operation in which the third transmit chain is deactivated.

9. An apparatus comprising:

at least two inputs, including first and second inputs for receiving radio frequency signals from first and second antenna elements of a MIMO system respectively;

at least two outputs, including first and second outputs for providing radio frequency signals to first and second receiver chains of the MIMO system respectively; and

means for routing radio frequency signals, wherein the means for routing radio frequency signals is configured to route radio frequency signals from the first and second antenna elements to the first and second outputs respectively in a first mode of operation and to route radio frequency signals from both the first and second antenna elements to the second output in a second mode of operation in which the first receiver chain is deactivated.

10. An apparatus as claimed in claim 9, wherein the means for routing radio frequency signals comprises:

a first switching module for selecting between providing radio frequency signals from the first antenna element to the first or second receiver chains.

11. An apparatus as claimed in claim 9 or claim 10, wherein said means for routing said radio frequency signals is provided between baseband processing modules and power amplifier modules of the MIMO system.

12. An apparatus as claimed in any one of claims 9 to 11, further comprising:

third and fourth inputs for receiving radio frequency signals from third and fourth antenna elements of the MIMO system respectively;

third and fourth outputs for providing radio frequency signals to third and fourth receiver chains of the MIMO system respectively; and

a second means for routing radio frequency signals, wherein the second means for routing radio frequency signals is configured to route radio frequency signals from the third and fourth antenna elements to the third and fourth receiver outputs respectively in the first mode of operation and to route radio frequency signals from both the third and fourth antenna elements to the fourth output in the second mode of operation in which the third transmit chain is deactivated.

13. A MIMO transceiver comprising:

a first transceiver chain;
a second transceiver chain;
first and second antenna elements;
a first radio frequency module comprising: at least two inputs, including first and second inputs for receiving radio frequency signals from the first and second transceiver chains respectively in a transmit mode of operation; at least two outputs, including first and second outputs for providing radio frequency signals to the first and second antenna elements respectively; and first means for routing radio frequency signals, wherein the first means for routing radio frequency signals is configured to route radio frequency signals from the first and second inputs to the first and second outputs respectively in a first mode of operation and to route radio frequency signals from the second input to both the first and second outputs in a second mode of operation in which the first transceiver chain is deactivated; and

a second radio frequency module comprising: at least two inputs, including first and second inputs for receiving radio frequency signals from the first and second antenna elements respectively in a receive mode of operation; at least two outputs, including first and second outputs for providing radio frequency signals to the first and second transceiver chains respectively; and second means for routing radio frequency signals, wherein the second means for routing radio frequency signals is configured to route radio frequency signals from the first and second antenna elements to the first and second outputs respectively in the first mode of operation and to route radio frequency signals from both the first and second antenna elements to the second output in the second mode of operation.

14. A method comprising:

receiving radio frequency signals from first and second transmit chains of a MIMO system at first and second inputs of a radio frequency module respectively, wherein said radio frequency module includes at least two inputs;
providing first and second outputs of the radio frequency module to first and second antenna elements of the MIMO system respectively, wherein said radio frequency module includes at least two outputs;
routing radio frequency signals from the first and second inputs to the first and second outputs respectively in a first mode of operation; and
routing radio frequency signals from the second input to both the first and second outputs in a second mode of operation in which the first transmit chain is deactivated.

15. A computer program comprising instructions which, when executed by an apparatus, cause the apparatus to:

receive radio frequency signals from first and second transmit chains of a MIMO system at first and second inputs of a radio frequency module respectively, wherein said radio frequency module includes at least two inputs;
provide first and second outputs of the radio frequency module to first and second antenna elements of the MIMO system respectively, wherein said radio frequency module includes at least two outputs;
route radio frequency signals from the first and second inputs to the first and second outputs respectively in a first mode of operation; and
route radio frequency signals from the second input to both the first and second outputs in a second mode of operation in which the first transmit chain is deactivated.

Fig. 1

Fig. 2

14a        16a        18a

Digital TRx      Analog TRx

K
Data
streams

Precoder

N
Transceiver
chains

Digital TRx      Analog TRx      18b

12        14b        16b

30

**Fig. 3**

44a        46a        18a

TRx chain      TRx chain

K
Data
streams

Precoder

N
Transceiver
chains

Routing

18b

TRx chain      TRx chain

12        44b        42        46b

40

**Fig. 4**

Receive RF signals for
transmission

52

Route RF signals
to outputs

54

Provide signals to
antenna elements

56

50

**Fig. 5**

Yes — First
mode? — No

62

Route outputs
to AEs

64

Route second
output to AEs

66

**Fig. 6**

60

*Fig. 7*

*Fig. 8*

94a

TRx chain

Routing

96a

TRx chain

98a

94b

TRx chain

92

TRx chain

98b

90

*Fig. 9*

Yes

First mode?

No

102

Route inputs to respective transceivers

104

Route inputs to second transceiver

106

*Fig. 10*

100

RF Rx out 1 ←

117

RF Rx out 2 ←

114

115

PS

1:2

PS

116

112

RF Rx in 1

113

RF Rx in 2

110

## Fig. 11

124a

126a

↕ Transceiver chain ↔ → Routing ↔ AE

122a

Transceiver chain ↔ → Routing ↔ AE

122b

126b

Routing

124b

120

## Fig. 12

19

EP 4 583 418 A1

Fig. 13

Fig. 14

Fig. 15

Fig. 16

Fig. 17

304

Memory

314 — RAM

312 — ROM

316
315

Network
Interface — 308

Processor

302

300

User
inputs

Display

318

310

*FIG. 18*

365

367

366

*Fig. 19*

Europäisches
Patentamt

European
Patent Office

Office européen
des brevets

## EUROPEAN SEARCH REPORT

**Application Number**

EP 24 22 2929

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/215024 A1 (NILSSON ANDREAS [SE] ET AL) 30 July 2015 (2015-07-30) * paragraphs [0040], [0019], [0053], [0054]; claims 11,12,13,8,9 * | 1-15 | INV. H04B7/0413 |

TECHNICAL FIELDS
SEARCHED       (IPC)

H04B

The present search report has been drawn up for all claims

| Place of search | Date of completion of the search | Examiner |
|---|---|---|
| Munich | 12 May 2025 | Belloni, Paolo |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 24 22 2929

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2025

| Patent document cited in search report | Publication date | Patent family member(s) | Publication date |
|---|---|---|---|
| US 2015215024 A1 | 30-07-2015 | BR 112012029071 A2 | 16-08-2016 |
| | | CN 102918707 A | 06-02-2013 |
| | | DK 2580811 T3 | 02-07-2018 |
| | | EP 2580811 A1 | 17-04-2013 |
| | | KR 20130098168 A | 04-09-2013 |
| | | PH 12012502204 A1 | 05-10-2022 |
| | | PT 2580811 T | 12-06-2018 |
| | | US 2013079047 A1 | 28-03-2013 |
| | | US 2015215024 A1 | 30-07-2015 |
| | | WO 2011154053 A1 | 15-12-2011 |

EPO FORM P0459

For more details about this annex : see Official Journal of the European Patent Office, No. 12/82